# EUROPÄISCHE PATENTSCHRIFT

(11) **EP 0 822 719 B1**
(45) Veröffentlichungstag und Bekanntmachung des Hinweises auf die Patenterteilung: **07.06.2006**
(21) Anmeldenummer: 97111417.8
(22) Anmeldetag: 05.07.1997
(51) Int. Cl.: H04N 7/167, H04N 7/16

(54) **Verfahren und Anordnungen zur Vermeidung unberechtigter Benutzung von Verteilernetzen**
Methods and arrangements for preventing unauthorised use of distribution networks
Méthodes et arrangements pour empêcher l'utilisation non-autorisée de réseaux de distribution

(30) Priorität: 30.07.1996 DE 19630707
(43) Veröffentlichungstag der Anmeldung: 04.02.1998
(73) Patentinhaber: Deutsche Telekom AG, 53113 Bonn (DE)
(72) Erfinder: Schwenk, Jörg, Dr. rer. nat., 91239 Henfenfeld (DE)
(74) Vertreter: Gornott, Dietmar

(56) Entgegenhaltungen:
- EP-A- 0 723 371
- "FUNCTIONAL MODEL OF A CONDITIONAL ACCESS SYSTEM" EBU REVIEW- TECHNICAL, Nr. 266, 21. Dezember 1995, Seiten 64-77, XP000559450 Grand Saconnex, CH

## Beschreibung

Die Erfindung betrifft ein Verfahren und Anordnungen zur Vermeidung unberechtigter Benutzung von Verteilernetzen, wobei zur Entschlüsselung von verschlüsselten Programmdaten bei Empfängern Kontrollwörter (CW) benutzt werden.

Gebührenpflichtige Rundfunkprogramme, die auch als Pay-TV bekanntgeworden sind, werden mit einem Schlüssel CW verschlüsselt. Benutzer werden dadurch zum Empfang berechtigt, daß man ihnen den Schlüssel (Kontrollwort) CW vertraulich zukommenläßt. Dazu wird im allgemeinen dem Benutzer ein persönlicher Schlüssel PK zur Verfügung gestellt, der meist physikalisch gegen Vervielfältigung gesichert, beispielsweise auf einer Chip-Karte gespeichert ist. Ein solches Verfahren ist under anderem in EP 0723 371 B1 beschrieben.

Das Kontrollwort CW wird verschlüsselt als Kryptogramm in einer ECM (Entitlement Control Message) über einen Datenkanal des Rundfunksenders vom Empfänger bzw. Decoder empfangen. Durch Entschlüsselung dieses Kryptogramms mit Hilfe des persönlichen Schlüssels PK oder eines anderen, auf der Chipkarte gespeicherten Schlüssels wird das Kontrollwort CW wiedergewonnen. Bei dem unter dem Namen EuroCrypt bekanntgewordenen System wird ein weiteres Kryptogramm eines Schlüssels SK in einer EMM (Entitlement Management Message) gesendet. Dieses Kryptogramm kann mit Hilfe von PK oder eines anderen, auf der Chipkarte gespeicherten Schlüssels entschlüsselt werden. Der so erhaltene Schlüssel SK dient zur Berechnung von CW aus dem Kryptogramm ECM. Dieses Zugangskontrollsystem ist in DIN EN 50 094 beschrieben. Sicherheitshalber kann der Schlüssel CW häufig gewechselt werden.

Mit diesen bekannten Verfahren ist es zwar möglich, einen unberechtigten Empfang von Rundfunksendungen zu verhindern. Eine unberechtigte Benutzung von Verteilernetzen, insbesondere von Kabelnetzen, wird dadurch jedoch nicht verhindert. Die derzeit durchgeführten Sicherheitsmaßnahmen, beispielsweise die Verplombung des Anschlusses und Kontrollen durch Personal, sind relativ unzuverlässig, so daß von einer großen Anzahl von sogenannten Schwarznutzern des Breitbandkabelnetzes auszugehen ist.

Aufgabe der vorliegenden Erfindung ist es, eine unberechtigte Nutzung von Verteilernetzen zu verhindern, ohne daß persönliche Kontrollen durchgeführt werden müssen.

Diese Aufgabe wird erfindungsgemäß dadurch gelöst, daß die Kontrollwörter mit einem programmspezifischen und mit einem netzspezifischen Schlüssel verschlüsselt zu den Empfängern in eines ECM-Nachticht übertragen werden und daß mit Hilfe der den berechtigten Empfängern mitgeteilten programmspezifischen und netzspezifischen Schlüssel die verschlüsselten Kontrollwörter entschlüsselt werden.

Das erfindungsgemäße Verfahren ist einerseits für Programmdaten geeignet, die unverschlüsselt sind. Andererseits kann das Verfahren für verschlüsselte Programmdaten angewendet werden, wozu auch freie - für jeden Teilnehmer des Verteilernetzes frei zugängliche - Programme gehören, die mit einem Schlüssel verschlüsselt sind, der in jedem Entschlüsselungsgerät (Decoder) vorhanden ist. Sofern die Programmdaten programmspezifisch verschlüsselt übertragen werden, ist vorgesehen, daß die Kontrollwörter mit einem programmspezifischen und mit einem netzspezifischen Schlüssel verschlüsselt zum Empfänger übertragen werden. Hierdurch werden unberechtigte Benutzungen von Diensten, wie beispielsweise Pay-TV oder Video-on-Demand, vor unberechtigter Benutzung geschützt, wobei gleichzeitig eine unberechtigte Benutzung des Verteilernetzes verhindert wird.

Das erfindungsgemäße Verfahren hat unter anderem den Vorteil, daß zur programmspezifischen Verschlüsselung bekannte Techniken benutzt werden können. Eine Anwendung des erfindungsgemäßen Verfahrens ist zusammen mit dem EUROCRYPT-Zugangskontrollsystem nach DIN EN 50 094 möglich, ohne daß das Verfahren auf dieses System beschränkt ist.

Zur empfängerseitigen Entschlüsselung der Kontrollwörter ist eine Unterscheidung erforderlich, ob die Kontrollwörter einfach oder mehrfach verschlüsselt sind. Bei einer Weiterbildung der Erfindung ist daher vorgesehen, daß ferner ein Indikator übertragen wird, der das Vorhandensein einer doppelten Verschlüsselung anzeigt. Je nach Struktur der übertragenen Kryptogramme kann jedoch eine Unterscheidung im Empfänger ohne einen expliziten Indikator vorgesehen werden.

Für den Fall, daß Programmdaten dem Verteilernetz bereits verschlüsselt zugeführt werden, ist bei einer vorteilhaften Ausgestaltung der Erfindung vorgesehen, daß in ECM-Nachrichten der zugeführten Programmdaten enthaltene Kryptogramme der Kontrollwörter (CW) vor einer weiteren Verschlüsselung entschlüsselt werden.

Eine vorteilhafte Anordnung zur Durchführung des erfindungsgemäßen Verfahrens besteht darin, daß in einer Kopfstation des Verteilernetzes sowohl Einrichtungen zur Verschlüsselung von unverschlüsselt zugeführten Programmdaten mit dem netzspezifischen Schlüssel und Einrichtungen zur Entschlüsselung von verschlüsselt zugeführten Programmdaten und zur Verschlüsselung mit einem neuen programmspezifischen und mit dem netzspezifischen Schlüssel vorgesehen sind. Dabei können die Einrichtungen zur Verschlüsselung von unverschlüsselt zugeführten Programmdaten diese ferner mit einem programmspezifischen Schlüssel verschlüsseln.

Eine vorteilhafte Anordnung zum Empfang von mit dem erfindungsgemäßen Verfahren verschlüsselten Programmdaten enthält Einrichtungen zum Empfang und zur Entschlüsselung der mindestens mit dem netzspezifischen Schlüssel verschlüsselten Programmdaten und einen Speicher für mindestens den netzspezifischen Schlüssel. Dabei wird in den meisten Fällen vorgesehen sein, daß die Einrichtung zur Entschlüsselung ferner zur Entschlüsselung mit einem programmspezifischen Schlüssel ausgelegt ist.

Die Sicherheit vor einer unberechtigten Benutzung des Verteilernetzes kann bei der erfindungsgemäßen Anordnung dadurch erhöht werden, daß der mindestens eine im Speicher abgelegte Schlüssel von Zeit zu Zeit durch eine verschlüsselte Übertragung geändert wird.

Ausführungsbeispiele der Erfindung sind in der Zeichnung anhand mehrerer Figuren als Blockschaltbilder dargestellt und in der nachfolgenden Beschreibung näher erläutert. Es zeigt:
- Fig. 1: ein Ausführungsbeispiel, bei dem die Verschlüsselung mit dem netzspezifischen und mit dem programmspezifischen Schlüssel in einer Kopfstation erfolgt, wobei die Schlüssel empfängerseitig langfristig gespeichert sind,
- Fig. 2: ein Ausführungsbeispiel mit einer Aktualisierung der empfängerseitig gespeicherten Schlüssel entsprechend dem EUROCRYPT-Zugangskontrollsystem und
- Fig. 3: ein ähnliches Ausführungsbeispiel, wobei jedoch die Programmdaten der Kopfstation bereits programmspezifisch verschlüsselt zugeführt werden.

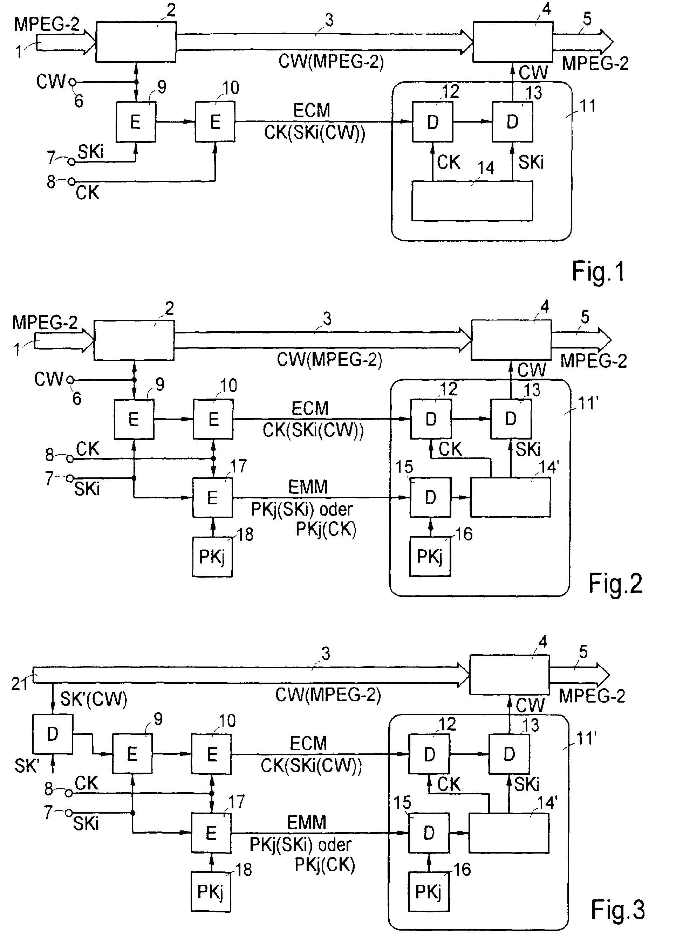

Bei dem Ausführungsbeispiel nach Fig. 1 werden Programmdaten in Form von MPEG-2-Signalen bei 1 von einem nicht dargestellten Programmanbieter zugeführt und bei 2 mit dem Kontrollwort CW verschlüsselt. Dabei weist die Bezeichnung DVB im Block 2 auf den Scrambling-Algorithmus des DVB (Digital Video Broadcasting) hin. Die somit verschlüsselten Programmdaten CW(MPEG-2) werden bei zübertragen, bei 4 mit dem Kontrollwort CW entschlüsselt und bei 5 einem Wiedergabegerät zugeführt. Den Verschlüsselungseinrichtungen 2, 9, 10 der Kopfstation werden bei 6, 7, 8 das Kontrollwort CW, ein programmspezifischer Schlüssel SKi und ein netzspezifischer Schlüssel CK zugeleitet, wobei i für das jeweilige Programm steht. Das Kontrollwort CW wird - wie bereits erwähnt - zur Verschlüsselung der Programmdaten benutzt und in Verschlüsselungseinrichtungen 9 und 10 selbst verschlüsselt und dann zu den Empfängern übertragen. Bei dem dargestellten Ausführungsbeispiel wird das Kontrollwort CW zunächst mit dem programmspezifischen Schlüssel SKi und dann mit dem netzspezifischen Schlüssel CK verschlüsselt.

Über das Netz, insbesondere das Kabel, gelangen die Daten CW(MPEG-2) und CK(SKi(CW)) zu den an das Netz angeschlossenen Empfängern, von denen in den Figuren nur jeweils einer mit den zur Erläuterung der Erfindung erforderlichen Teilen dargestellt ist. Das zweimal verschlüsselte Kontrollwort wird bei dem Ausführungsbeispiel als ECM-Nachricht (Entitlement Control Message) an die Empfänger übertragen.

Die zur Entschlüsselung des Kontrollwortes CW erforderlichen Funktionen werden häufig auf einer Chipkarte 11 implementiert. Dazu gehören bei dem Ausführungsbeispiel nach Fig. 1 zwei Entschlüsseler 12, 13, denen von einem Speicher 14 der netzspezifische Schlüssel CK und ein programmspezifischer Schlüssel SKi zugeführt wird. Das verschlüsselte Kontrollwort CK(SKi(CW)) wird dann zunächst mit dem netzspezifischen Schlüssel CK, dann mit dem programmspezifischen Schlüssel SKi entschlüsselt und zum DVB-Entschlüsseler 4 übertragen. Die Reihenfolge der einzelnen Verschlüsselungen des Kontrollwortes bleibt letztlich dem Fachmann überlassen. Es ist durchaus möglich, anders als im dargestellten Ausführungsbeispiel, zunächst mit dem netzspezifischen Schlüssel CK und dann mit dem programmspezifischen Schlüssel SKi zu verschlüsseln und die Entschlüsseler 12, 13 entsprechend zu vertauschen.

Bei dem in Fig. 2 dargestellten Ausführungsbeispiel werden empfängerseitig die Schlüssel CK und SKi in einem Speicher 14' nur bis zur folgenden Aktualisierung gespeichert. Von Zeit zu Zeit werden neue Schlüssel jeweils mit Hilfe einer EMM-Nachricht (Entitlement Management Message) übertragen. Um eine Auswertung dieser Nachricht durch Unbefugte zu verhindern, wird diese Nachricht mit einem für den jeweiligen Empfänger spezifischen Schlüssel PKj in der Kopfstation bei 17 verschlüsselt, wobei j für den jeweiligen Empfänger steht. Die empfängerspezifischen Schlüssel PKj sind in der Kopfstation in einem Speicher 18 für sämtliche Empfänger abgelegt. Auf der Chipkarte 11' des Empfängers befindet sich ein Speicher 16 für den empfängerspezifischen Schlüssel. Mit Hilfe der EMM-Nachricht wird alternativ der programmspezifische Schlüssel SKi oder der netzspezifische Schlüssel CK übertragen.

Bei dem Ausführungsbeispiel nach Fig. 3 erfolgt die Ver- und Entschlüsselung des Kontrollwortes CW in gleicher Weise wie bei dem Ausführungsbeispiel nach Fig. 2. Es werden jedoch bei 21 der Kopfstation bereits mit dem Kontrollwort CW verschlüsselte Programmdaten MEPG-2 zugeleitet. In einer ECM-Nachricht dieser Daten erhält die Kopfstation ferner das mit einem programmspezifischen Schlüssel SK' verschlüsselte Kontrollwort CW. Dieser Schlüssel ist in der Kopfstation bekannt, so daß das Kontrollwort CW bei 23 entschlüsselt werden kann. Bei 9 wird wie bei dem Ausführungsbeispiel nach Fig. 2 das Kontrollwort CW wieder verschlüsselt.

## Patentansprüche

1. Verfahren zur Vermeidung unberechtigter Benutzung von Verteilernetzen, wobei zur Entschlüsselung von verschlüsselten Programmdaten bei Empfängern Kontrollwörter (CW) benutzt werden, **dadurch gekennzeichnet, daß** die Kontrollwörter mit einem programmspezifischen und mit einem netzspezifischen Schlüssel verschlüsselt zu den Empfängern in einer ECM-Nachricht übertragen werden und daß mit Hilfe der den berechtigten Empfängern mitgeteilten programmspezifischen und netzspezifischen Schlüssel die verschlüsselten Kontrollwörter entschlüsselt werden.

2. Verfahren nach Anspruch 1, **dadurch gekennzeichnet, daß** die Programmdaten programmspezifisch verschlüsselt übertragen werden.

3. Verfahren nach einem der Ansprüch 1 oder 2, **dadurch gekennzeichnet, daß** ferner ein Indikator übertragen wird, der das Vorhandensein einer doppelten Verschlüsselung anzeigt.

4. Verfahren nach einem der vorhergehenden Ansprüche, wobei Programmdaten dem Verteilernetz bereits verschlüsselt zugeführt werden, **dadurch gekennzeichnet, daß** in ECM-Nachrichten der zugeführten Programmdaten enthaltene Kryptogramme der Kontrollwörter (CW) vor einer weiteren Verschlüsselung entschlüsselt werden.

5. Anordnung zur Vermeidung unberechtigter Benutzung von Verteilernetzen, wobei zur Entschlüsselung von verschlüsselten Programmdaten bei Empfängern Kontrollwörter (CW) benutzt werden, wobei die Kontrollwörter mit einem programmspezifischen und mit einem netzspezifischen Schlüssel verschlüsselt zu den Empfängern in eines ECM-Nachricht übertragen werden und wobei mit Hilfe der den berechtigten Empfängern mitgeteilten programmspezifischen und netzspezifischen Schlüssel die verschlüsselten Kontrollwörter entschlüsselt werden; **dadurch gekennzeichnet, daß** in einer Kopfstation des Verteilernetzes sowohl Einrichtungen zur Verschlüsselung von unverschlüsselt zugeführten Programmdaten mit dem netzspezifischen Schlüssel und Einrichtungen zur Entschlüsselung von verschlüsselt zugeführten Programmdaten und zur Verschlüsselung mit dem programmspezifischen und mit dem netzspezifischen Schlüssel vorgesehen sind.

6. Anordnung nach Anspruch 5, **dadurch gekennzeichnet, daß** die Einrichtungen zur Verschlüsselung von unverschlüsselt zugeführten Programmdaten diese ferner mit dem programmspezifischen Schlüssel verschlüsseln.

7. Anordnung zum Empfang von wobei zur Entschlüsselung der verschlüsselten Programmdaten bei Empfängern Kontrollwörter (CW) benutzt werden, und wobei zur Vermeidung unberechtigter Benutzung von Verteilernetzen die Kontrollwörter mit einem programmspezifischen und mit einem netzspezifischen Schlüssel verschlüsselt zu den Empfängern in einer ECM-Nachricht übertragen werden und mit Hilfe der den berechtigten Empfängern mitgeteilten programmspezifischen und netzspezifischen Schlüssel die verschlüsselten Kontrollwörter entschlüsselt werden; verschlüsselten Programmdaten, **gekennzeichnet durch** Einrichtungen zum Empfang und zur Entschlüsselung der mindestens mit dem netzspezifischen Schlüssel verschlüsselten Programmdaten und einen Speicher für mindestens den netzspezifischen Schlüssel.

8. Anordnung nach Anspruch 7, **dadurch gekennzeichnet, daß** die Einrichtung zur Entschlüsselung ferner zur Entschlüsselung mit einem programmspezifischen Schlüssel ausgelegt ist.

9. Anordnung nach einem der Ansprüche 7 oder 8, **dadurch gekennzeichnet, daß** der mindestens eine im Speicher abgelegte Schlüssel von Zeit zu Zeit durch eine verschlüsselte Übertragung geändert wird.

## Claims

1. Method for avoiding unauthorized use of distribution networks, wherein control words (CW) are used for decrypting encrypted program data in receivers, **characterized in that** the control words are encrypted with a program-specific key and with a network-specific key and transmitted in an ECM message to the receivers, and **in that** the encrypted control words are decrypted with the aid of the program-specific and network-specific keys communicated to the authorized receivers.

2. Method according to claim 1, **characterized in that** the program data are transmitted with program-specific encryption.

3. Method according to any one of claims 1 or 2, **characterized in that** an indicator indicating the presence of double encryption is also transmitted.

4. Method according to any one of the preceding claims, wherein program data are supplied to the distribution network in an already encrypted form, **characterized in that** the cryptograms of the control words (CW) contained in the program data supplied in ECM messages are decrypted prior to a further encryption.

5. Arrangement for avoiding unauthorized use of distribution networks, wherein control words (CW) are used for decrypting encrypted program data in receivers, wherein the control words are encrypted with a program-specific key and with a network-specific key and transmitted in an ECM message to the receivers, and wherein the encrypted control words are decrypted with the aid of the program-specific and network-specific keys communicated to the authorized receivers, **characterized in that** devices for encrypting, using the network-specific key, program data that are supplied in unencrypted form, as well as devices for decrypting program data that are supplied in encrypted form and encrypting it with the program-specific and network-specific keys, are provided in a head station of the distribution network.

6. Arrangement according to claim 5, **characterized in that** the devices for encrypting program data supplied in unencrypted form additionally encrypt said data with the program-specific key.

7. Arrangement for receiving encrypted program data, wherein control words (CW) are used for decrypting the encrypted program data in receivers, and wherein, to avoid unauthorized use of distribution networks, the control words are transmitted to the receivers in an ECM message encrypted with a program-specific key and with a network-specific key, and are decrypted with the aid of the program-specific and network-specific keys that are communicated to the authorized receivers, **characterized by** devices for receiving and decrypting the program data that have been encrypted with at least the network-specific key, and by a memory for at least the network-specific key.

8. Arrangement according to claim 7, **characterized in that** the device for decryption is also designed for decryption using a program-specific key.

9. Arrangement according to any one of claims 7 or 8, **characterized in that** the at least one key stored in the memory is changed from time to time by an encrypted transmission.

## Revendications

1. Procédé pour éviter l'utilisation non autorisée de réseaux de distribution, des mots de contrôle (CW) étant utilisés côté destinataires pour le déchiffrement de données de programme chiffrés, **caractérisé en ce que** les mots de contrôle sont transmis aux destinataires dans un message ECM de manière chiffrée avec une clé spécifique au programme et une clé spécifique au réseau et **en ce que** les mots de contrôle chiffrés sont déchiffrés à l'aide des clés spécifiques au programme et au réseau communiquées aux destinataires autorisés.

2. Procédé selon la revendication 1, **caractérisé en ce que** les données de programme sont transmises de manière chiffrée avec une clé spécifique au programme.

3. Procédé selon l'une des revendications 1 ou 2, **caractérisé en ce qu'**un indicateur est en plus transmis, qui indique la présence d'un double chiffrement.

4. Procédé selon l'une des revendications précédentes, les données de programme étant déjà chiffrées lorsqu'elles parviennent au réseau de distribution, **caractérisé en ce que** des cryptogrammes des mots de contrôle (CW) contenus dans des messages ECM des données de programme transmises sont déchiffrés avant un nouveau chiffrement.

5. Dispositif pour éviter l'utilisation non autorisée de réseaux de distribution, des mots de contrôle (CW) étant utilisés côté destinataires pour le déchiffrement de données de programme chiffrées, les mots de contrôle étant transmis aux destinataires dans un message ECM de manière chiffrée avec une clé spécifique au programme et une clé spécifique au réseau et les mots de contrôle chiffrés étant déchiffrés à l'aide des clés spécifiques au programme et au réseau communiquées aux destinataires autorisés, **caractérisé en ce que** dans une station de tête du réseau de distribution sont prévus des équipements pour le chiffrement de données de programme transmises non chiffrées à l'aide de la clé spécifique au réseau ainsi que des équipements pour le déchiffrement de données de programme transmises chiffrées et pour le chiffrement à l'aide de la clé spécifique au programme et de la clé spécifique au réseau.

6. Dispositif selon la revendication 5, **caractérisé en ce que** les équipements pour le chiffrement de données de programme transmises non chiffrées chiffrent lesdites données également avec la clé spécifique au programme.

7. Dispositif pour la réception de données de programme chiffrées, des mots de contrôle (CW) étant utilisés côté destinataires pour le déchiffrement des données de programme chiffrées et les mots de contrôle étant transmis aux destinataires dans un message ECM de manière chiffrée avec une clé spécifique au programme et une clé spécifique au réseau pour éviter l'utilisation non autorisée de réseaux de distribution et les mots de contrôle chiffrés étant déchiffrés à l'aide des clés spécifiques au programme et au réseau communiquées aux destinataires autorisés, **caractérisé par** des équipements de réception et de déchiffrement des données de programme chiffrées au moins à l'aide de la clé spécifique au réseau et par une mémoire pour au moins la clé spécifique au réseau.

8. Dispositif selon la revendication 7, **caractérisé en ce que** l'équipement de déchiffrement est en plus conçu pour le déchiffrement à l'aide d'une clé spécifique au programme.

9. Dispositif selon l'une des revendications 7 ou 8, **caractérisé en ce qu'**au moins une clé stockée dans la mémoire est changée de temps à autre par une transmission chiffrée.
